# EUROPÄISCHE PATENTANMELDUNG

(11) **EP 2 662 007 A1**
(43) Veröffentlichungstag der Anmeldung: **13.11.2013**
(21) Anmeldenummer: 12401090.1
(22) Anmeldetag: 10.05.2012
(51) Int. Cl.: A47J 45/07, A47J 36/24

(54) **Temperiereinrichtung und Gargerät mit einer Temperiereinrichtung**

(71) Anmelder: Miele & Cie. KG, 33332 Gütersloh (DE)
(72) Erfinder: Harms, Wilko, 59609 Anröchte (DE); Schalück, Matthias, 33378 Rheda-Wiedenbrück (DE)

(57) **Zusammenfassung**

Temperiereinrichtung und Gargerät mit einer Temperiereinrichtung zum Warmhalten sowie Kühlhalten von Speisen mit einer Temperiereinheit und einer abnehmbaren Griffeinrichtung.

## Beschreibung

Die vorliegende Erfindung betrifft eine Temperiereinrichtung, welche insbesondere zum Warmhalten und/oder Kühlhalten von Speisen geeignet ist, sowie ein Gargerät mit einer solchen Temperiereinrichtung.

Für den gewünschten Genuss und Geschmack vieler Speisen ist es in der Regel sehr entscheidend, dass die Speisen beim Verzehr eine bestimmte Temperatur aufweisen. Besonders während des Anrichtens und Servierens der Speisen ist die Aufrechterhaltung einer optimalen Verzehrtemperatur daher sehr wichtig. Beispielsweise müssen an einem warmen Buffet die Speisen, wie Braten, Saucen und Beilagen, über eine längere Zeit warm gehalten werden. Andererseits ist es notwendig, die Speisen an einem kalten Buffet, wie z. B. Eiscreme, über einen gewissen Zeitraum kühl zu halten.

Es sind daher verschiedene Temperiereinrichtungen bekannt geworden, welche zum Warmhalten oder Kühlhalten von Speisen eingesetzt werden können. Beispielsweise werden insbesondere in der Gastronomie Warmhalteplatten eingesetzt, welche vor Gebrauch in einem in der Regel elektrisch betriebenen Aufheizgerät auf eine Betriebstemperatur erhitzt werden müssen. Nach dem Aufheizen werden die Warmhalteplatten dem Aufheizgerät entnommen und können dann unter die warm zu haltenden Speisen, beispielsweise auf einem Buffet, gestellt werden. Nachteilig an derartigen Temperiereinrichtungen ist, dass in der Regel spezielle Aufheizgeräte notwendig sind. Dadurch sind solche Temperiereinrichtungen häufig sehr teuer.

Eine weitere Art einer Temperiereinrichtung, wie beispielsweise ein Rechaud, verwendet meistens eine offene Flamme zum Warmhalten bzw. Erhitzen von Speisen. Dazu wird in der Regel ein Gefäß mit Speisen auf ein Gestell mit einem Spiritusbrenner oder dergleichen gesetzt. Solche Temperiereinrichtungen haben den Nachteil, dass die offene Flamme Verbrennungsrückstände und Materialverfärbungen auf dem Gefäß mit den Speisen und insbesondere an weißem Porzellan zurücklassen bzw. erzeugen kann. Es gibt zwar auch Rechauds mit einer elektrischen Heizquelle, allerdings benötigen diese Temperiereinrichtungen dann meistens einen elektrischen Anschluss, welcher an einem Buffet nicht immer verfügbar ist. Die elektrischen Verbindungen und Steckdosen können zudem auch optisch ein Buffet oder eine Tafel stören. Ein weiterer Nachteil ist, dass solche Temperiereinrichtungen meistens nur zum Warmhalten, nicht aber zum Kühlen von Speisen eingesetzt werden können.

Es ist daher die Aufgabe der vorliegenden Erfindung, eine Temperiereinrichtung und ein Gargerät mit einer Temperiereinrichtung zur Verfügung zu stellen, welche bzw. welches kostengünstig ist und keine speziellen Aufheizgeräte benötigt.

Diese Aufgabe wird gelöst durch eine Temperiereinrichtung mit den Merkmalen des Anspruchs 1 und durch ein Gargerät mit einer Temperiereinrichtung mit den Merkmalen des Anspruchs 16. Bevorzugte Merkmale sind Gegenstand der Unteransprüche. Weitere Vorteile und Merkmale ergeben sich aus der allgemeinen Beschreibung der Erfindung und der Beschreibung des Ausführungsbeispiels.

Die erfindungsgemäße Temperiereinrichtung ist insbesondere zum Warmhalten und/oder Kühlhalten von Speisen geeignet und weist wenigstens eine Temperiereinheit und wenigstens eine abnehmbare Griffeinrichtung auf.

Die erfindungsgemäße Temperiereinrichtung hat viele Vorteile. Ein erheblicher Vorteil ist, dass die Temperiereinrichtung eine abnehmbare Griffeinrichtung umfasst. Dadurch kann die Temperiereinrichtung ohne die Griffeinrichtung aufgeheizt werden. Beim Umgang mit der Griffeinrichtung besteht somit keine Verbrennungsgefahr an den Händen. Ein weiterer Vorteil der abnehmbaren Griffeinrichtung ist, dass die Temperiereinrichtung beispielsweise in einem herkömmlichen Backofen aufgeheizt werden kann, ohne dass die Griffeinrichtung dabei durch die Hitze Schaden nimmt oder gefährlich heiß wird. Somit ist kein spezielles Aufheizgerät nötig, wodurch eine solche Temperiereinrichtung erheblich kostengünstiger ist.

Die Temperiereinrichtung kann mit abgenommener Griffeinrichtung in einem Kühlschrank oder in einem Gefriergerät besonders platzsparend auch gekühlt werden. Anschließend können, beispielsweise an einem Buffet oder auf einer Tafel, Speisen auf die vorgekühlte Temperiereinrichtung gestellt und so über einen längeren Zeitraum kühl und frisch gehalten werden. Das ist sehr vorteilhaft, weil zum Kühlen der Temperiereinrichtung kein spezielles Kühlgerät benötigt wird, sondern einfach herkömmliche Kühlgeräte bzw. Gefriergeräte eingesetzt werden können. Die erfindungsgemäße Temperiereinrichtung ist daher besonders kostengünstig und universell sowohl zum Warmhalten als auch zum Kühlhalten von Speisen einsetzbar.

Es ist besonders bevorzugt, dass die Temperiereinrichtung mit wenigstens einer passiven Temperiereinheit ausgeführt ist und keine eigene Heizquelle zum Aufheizen aufweist. Die Temperiereinheit ist dabei insbesondere als Platte und/oder als Block oder blockartige Platte ausgeführt. Eine solche Ausgestaltung ermöglicht ein platzsparendes Aufheizen der Temperiereinheit in einem herkömmlichen Gargerät sowie ein platzsparendes Kühlen in einem herkömmlichen Kühlgerät. Vorzugsweise ist die Temperiereinheit derart ausgestaltet, dass die Temperiereinheit wie ein herkömmlicher Gargutträger, z. B. ein Backblech, von den üblichen Haltevorrichtungen für Gargutträger im Garraum eines Gargerätes gehalten werden kann. Besonders bevorzugt ist wenigstens eine Seite und insbesondere die obere Seite oder die obere und die untere Seite der Temperiereinheit wenigstens teilweise als eine ebene Fläche oder dergleichen ausgestaltet. So kann die Temperiereinheit die zu temperierenden Speisen besonders gut aufnehmen.

Die Griffeinrichtung der Temperiereinrichtung umfasst insbesondere wenigstens einen Griff. Bevorzugt sind zwei Griffe, wodurch eine sichere Handhabung mit beiden Händen möglich ist. Insbesondere besteht die Griffeinrichtung wenigstens teilweise aus wenigstens einem Kunststoff. Das ist besonders vorteilhaft, da Kunststoffgriffe ein geringes Gewicht haben und kostengünstig herzustellen sind. Weiterhin haben Kunststoffgriffe ein gutes Isolationsverhalten gegenüber erhitzten Bereichen der Temperiereinrichtung und ermöglichen daher eine sichere Handhabung. Auch sind ansprechende Designs mit Kunststoffen einfach zu realisieren. Da die Griffeinrichtung abnehmbar ist, stellt die Hitze beim Aufheizen und beim Betrieb der Temperiereinrichtung kein Problem für Kunststoffgriffe dar. Möglich sind aber auch andere Materialien wie z. B. Aluminium und/oder wenigstens ein anderes metallisches Material.

In einer bevorzugten Ausgestaltung umfasst die Temperiereinrichtung wenigstens eine Aufnahmeeinrichtung zur Befestigung der Griffeinrichtung. Die Aufnahmeeinrichtung ist dabei insbesondere an der Temperiereinheit vorgesehen. Besonders bevorzugt sind wenigstens zwei Aufnahmeeinrichtungen, welche insbesondere an zwei unterschiedlichen Seiten der Temperiereinheit angeordnet sind. Möglich sind auch Aufnahmeeinrichtungen an jeder Seite oder nur an drei Seiten oder aber auch nur an einer Seite der Temperiereinheit. Die Aufnahmeeinrichtung kann auch die gesamte Temperiereinheit umrunden. Durch derartige Ausgestaltungen kann die Griffeinrichtung an mehreren Stellen angebracht werden. Das ist besonders von Vorteil beim Abräumen der Temperiereinheit von einer besetzten Tafel, da die Temperiereinheit zum Anbringen der Griffe nicht erst passend zurechtgestellt werden muss.

Die Aufnahmeeinrichtung kann als ein Loch oder Langloch sowie als ein Schlüsselloch oder dergleichen ausgestaltet sein oder wenigstens ein solches umfassen. Dabei kann wenigstens ein Griff der Griffeinrichtung vorzugsweise stangenförmig mit einem quer abstehenden Ende ausgebildet sein. Ein solcher Griff kann dann wenigstens teilweise in das Schlüsselloch eingeführt und durch Drehen und/oder eine andere Bewegung arretiert werden. Eine solche Ausgestaltung der Aufnahmeeinrichtung ermöglicht eine einfache, sichere und auch wieder lösbare Verbindung zwischen der Temperiereinheit und der Griffeinrichtung. Möglich sind aber auch Rastverbindungen und/oder Schraubverbindungen sowie Steckverbindungen und/oder dergleichen.

Gemäß einer besonders bevorzugten Ausgestaltung umfasst die Aufnahmeeinrichtung wenigstens ein Aufnahmeprofil. Das Aufnahmeprofil ist vorzugsweise derart ausgestaltet, dass wenigstens eine Griffeinrichtung im Wesentlichen formschlüssig mit der Aufnahmeeinrichtung verbunden werden kann. Dazu weist das Aufnahmeprofil insbesondere wenigstens eine Vertiefung und/oder wenigstens eine Erhebung auf. Vorzugsweise weist die Griffeinrichtung wenigstens ein wenigstens teilweise zum Aufnahmeprofil passendes Gegenprofil auf.

Das Aufnahmeprofil kann wenigstens teilweise an der Temperiereinheit angebracht oder wenigstens teilweise aus der Temperiereinheit selbst gebildet sein. Dabei ist die Vertiefung vorzugsweise wenigstens teilweise in die Temperiereinheit eingearbeitet. Auch die Erhebung kann wenigstens teilweise aus der Temperiereinheit selbst gebildet oder aber wenigstens teilweise an dieser angebracht sein.

Vorzugsweise ist an der Aufnahmeeinrichtung wenigstens ein Eingangsbereich zum Einführen der Griffeinrichtung vorgesehen. Der Eingangsbereich kann vorzugsweise als Abschnitt ohne Aufnahmeprofil und/oder als Vertiefung ausgebildet sein. Wenn die Aufnahmeeinrichtung wenigstens eine Erhebung umfasst, kann die Erhebung wenigstens teilweise flacher ausgeführt sein und/oder wenigstens teilweise nicht vorhanden sein und dadurch als Eingangsbereich geeignet sein.

In allen Ausgestaltungen ist es bevorzugt, dass die Griffeinrichtung über den Eingangsbereich in das Aufnahmeprofil bzw. die Vertiefung eingeführt wird. Besonders bevorzugt liegt der Einschubabschnitt wenigstens teilweise zwischen zwei Aufnahmeprofilen und/oder wenigstens teilweise in einem Aufnahmeprofil. Das ermöglicht ein einfaches und sicheres Anbringen zweier Griffe, wobei jeder Griff nach dem Einführen in den Eingangsbereich seitlich in das Aufnahmeprofil eingeschoben werden kann.

Ebenfalls bevorzugt ist an der Aufnahmeeinrichtung wenigstens ein Verriegelungsbereich vorgesehen, welcher zum gesicherten Anbringen der Griffeinrichtung und insbesondere wenigstens eines Griffes dient. Der Verriegelungsbereich kann wenigstens teilweise an der Temperiereinheit angebracht oder wenigstens teilweise aus der Temperiereinheit selbst gebildet sein. Möglich ist auch, dass der Verriegelungsbereich wenigstens eine Rastverbindung und/oder Schraubverbindung sowie wenigstens eine Steckverbindung und/oder eine andere wieder lösbare Verbindung mit der Griffeinrichtung aufweist.

Vorzugsweise ist wenigstens ein Abschnitt des Aufnahmeprofils als Verriegelungsbereich ausgebildet. Dabei kann die Erhebung veränderte Ausmaße aufweisen und insbesondere höher und/oder niedriger und/oder schmaler sowie breiter ausgestaltet sein. Möglich ist auch, dass das Aufnahmeprofil wenigstens teilweise keilförmig und/oder kegelförmig sowie konisch und/oder dergleichen ausgestaltet ist. Solche zumindest teilweise Veränderungen des Aufnahmeprofils zu einem Verriegelungsbereich ermöglichen eine besonders sichere Verbindung der Temperiereinheit mit der Griffeinrichtung. Beispielsweise kann ein Griff im Verriegelungsbereich durch die keilförmige Ausgestaltung des Aufnahmeprofils nur mit einem erhöhten Kraftaufwand eingeführt und wieder gelöst werden, was ein unbeabsichtigtes Verrutschen des Griffes verhindert. Die Griffeinrichtung weist in allen Ausgestaltungen ein wenigstens teilweise passendes Gegenprofil zu dem Verriegelungsbereich auf.

Es ist weiterhin möglich und bevorzugt, dass die Griffeinrichtung wenigstens einen Halteabschnitt umfasst. Der Halteabschnitt dient insbesondere zur Verbindung der Griffeinrichtung mit der Aufnahmeeinrichtung. Der Halteabschnitt kann dabei als ein Teil der Griffeinrichtung und insbesondere eines Griffes ausgebildet sein. Der Halteabschnitt kann aber auch an diesen angebracht sein. In allen Ausgestaltungen ist der Halteabschnitt an die Aufnahmeeinrichtung bzw. an das Aufnahmeprofil wenigstens teilweise angepasst.

In bevorzugten Weiterbildungen ist ein Querschnitt des Halteabschnitts an einen Querschnitt des Aufnahmeprofils wenigstens teilweise angepasst. Insbesondere ist der Halteabschnitt maulartig ausgebildet und weist vorzugsweise wenigstens einen Vorsprung und/oder wenigstens eine Ausnehmung auf. Der Vorsprung kann dabei wenigstens teilweise über den Eingangsbereich in die Vertiefung des Aufnahmeprofils eingeführt werden. Möglich ist wenigstens ein Vorsprung und insbesondere zwei Vorsprünge in symmetrischer und/oder asymmetrischer Anordnung, beispielsweise gegenüberliegend. Die Ausnehmung des Halteabschnitts kann wie zuvor für den Vorsprung beschrieben angeordnet sein und ist dabei an die Erhebung des Aufnahmeprofils und/oder an den Abschnitt außerhalb der Vertiefung des Aufnahmeprofils angepasst. Eine solche Ausgestaltung ist einfach und robust und kann kostengünstig hergestellt werden. Die Griffeinrichtung kann zudem formschlüssig und sicher mit dem Aufnahmeprofil bzw. mit der Temperiereinheit verbunden werden.

Die Griffeinrichtung ist vorzugsweise so ausgebildet, dass die Griffeinrichtung durch wenigstens zwei Bewegungen in unterschiedliche Richtungen mit der Aufnahmeeinrichtung sicher verbindbar ist. Weiterhin ist die Griffeinrichtung vorzugsweise durch wenigstens zwei Bewegungen in unterschiedliche Richtungen von der Aufnahmeeinrichtung lösbar ausgebildet. Beispielsweise kann ein Griff durch eine Bewegung nach vorne in den Eingangsbereich eingeführt werden. Anschließend wird der Griff durch eine zweite Bewegung seitlich verschoben und so in das Aufnahmeprofil und schließlich in den Verriegelungsbereich bewegt. Dabei umgreift der Haltebereich insbesondere maulartig das Aufnahmeprofil bzw. den Verriegelungsbereich. Der Vorsprung greift in die Vertiefung und in der Ausnehmung befindet sich die Erhebung. Durch eine solche Ausgestaltung kann die Griffeinrichtung sehr unkompliziert mit der Temperiereinheit verbunden werden, was besonders vorteilhaft ist, wenn die aufgeheizte Temperiereinheit beispielsweise aus einem Gargerät entnommen wird.

In einer weiteren bevorzugten Ausgestaltung ist die Temperiereinheit in einem Garraum eines Gargerätes bei typischen Garraumtemperaturen aufheizbar ausgebildet. Besonders bevorzugt ist eine hitzebeständige Ausführung, welche wenigstens für Temperaturen bis 250°C und insbesondere für höhere Temperaturen ausgebildet und geeignet ist. Das ist besonders vorteilhaft, da dadurch ein Aufheizen in herkömmlichen Gargeräten wie beispielsweise einem Backofen möglich ist.

Vorzugsweise ist die Beschaffenheit und insbesondere das Material der Temperiereinheit so ausgestaltet, dass die Temperiereinheit die Wärme gut speichern und im Anschluss an die Aufheizphase gleichmäßig über einen "längeren" Zeitraum abgeben kann. Dazu kann die Temperiereinheit wenigstens teilweise aus wenigstens einem Metall und insbesondere aus Aluminium und/oder einer Aluminiumlegierung gefertigt sein. Möglich ist auch eine Temperiereinheit wenigstens teilweise aus Kupfer und/oder Eisen und/oder Stahl sowie Edelstahl und/oder einem Gussmaterial. Die Temperiereinheit kann auch wenigstens teilweise mit einer Beschichtung aus PTFE und/oder Teflon versehen sein.

Möglich und bevorzugt ist auch, dass die Temperiereinheit in einer Gargutträgeraufnahme eines Gargerätes aufnehmbar ist. Dabei kann die Gargutträgeraufnahme auch einen Auszug oder dergleichen umfassen. Insbesondere weist die Temperiereinheit geeignete Maße auf, welche insbesondere der Breite eines herkömmlichen Backblechs oder eines anderen Gargutträgers entsprechen. Das ist besonders vorteilhaft, da ein leichtes und sicheres Hineinstellen und Herausnehmen der Temperiereinrichtung in ein Gargerät bzw. aus einem Gargerät möglich ist. Auch kann die Griffeinrichtung besonders gut und handhabungssicher angebracht bzw. entfernt werden, wenn die Temperiereinheit in einer Gargutträgeraufnahme eingebracht ist.

An der Temperiereinheit kann eine Führungseinrichtung zur Aufnahme in der Gargutträgeraufnahme vorgesehen sein. Die Führungseinrichtung kann als abgeflachter Abschnitt an wenigstens zwei Seiten und/oder als Schiene oder dergleichen ausgebildet sein. Möglich ist, dass die Führungseinrichtung wenigstens teilweise aus der Temperiereinheit selbst gebildet und/oder an diese angebracht ist. Die Führungseinrichtung kann auch hakenähnlich und/oder als abgewinkelte Schiene und/oder dergleichen ausgestaltet sein. Möglich ist auch, dass die Führungseinrichtung auf wenigstens eine bestimmte Gargutträgeraufnahme angepasst ist.

Die Temperiereinrichtung kann wenigstens eine Stützeinrichtung zur Aufnahme der Temperiereinheit umfassen. Die Stützeinrichtung kann als Gestell und/oder Stützwanne bzw. Stützschale und/oder dergleichen ausgebildet sein und umfasst vorzugsweise wenigstens einen Fuß. Der Fuß ist dabei insbesondere wärmeisolierend gestaltet und ist beispielsweise aus Silikon und/oder einem anderen geeignetem Material. Eine solche Ausgestaltung schützt einen Standbereich der Temperiereinrichtung, beispielsweise Tischplatte, vor Hitze.

Weiterhin weist die Stützeinrichtung vorteilhafterweise wenigstens eine Halterung für eine Heizquelle und insbesondere für eine Heizquelle mit offener Flamme auf. Die Heizquelle ist dabei insbesondere zur Beheizung der Temperiereinheit geeignet und ausgebildet und kann beispielsweise ein Spiritusbrenner, eine Kerze, ein Teelicht, eine Trockenbrennstoffheizquelle oder dergleichen sein. Daran ist besonders vorteilhaft, dass die Temperiereinheit langsamer auskühlt und eine solche Heizquelle keine elektrische Verbindung oder dergleichen benötigt, was an einem Buffet als optisch störend empfunden werden könnte. Möglich ist aber auch eine elektrische und/oder gasbetriebene Heizquelle.

Die Stützeinrichtung weist vorzugsweise wenigstens eine wenigstens teilweise temperaturisolierende und/oder wenigstens teilweise sichernde Verbindungseinrichtung auf. Dabei dient die Verbindungseinrichtung im Wesentlichen zur temperaturisolierenden und rutschfesten Auflage der Temperiereinheit auf der Stützeinrichtung. Möglich ist beispielsweise ein Silikonstopfen oder dergleichen als Verbindungseinrichtung oder als Teil der Verbindungseinrichtung. Eine solche Verbindungseinrichtung ist vorteilhaft, weil dadurch möglichst wenig Hitze von der erhitzten Temperiereinheit an die Stützeinrichtung weitergegeben wird.

Möglich ist auch, dass die Verbindungseinrichtung im Wesentlichen als Steckverbindung und/oder Rastverbindung und/oder Schraubverbindung oder dergleichen ausgebildet ist. Eine derartige Weiterbildung ermöglicht insbesondere ein Anheben der Temperiereinheit zusammen mit der Stützeinrichtung, wobei die Griffeinrichtung dabei an der Temperiereinheit befestigt ist. In solchen Ausgestaltungen ist die Verbindungseinrichtung insbesondere als gesicherte Verbindung ausgebildet, um ein Herunterfallen der Stützwanne zu verhindern. Vorteilhaft daran ist, dass nur eine Griffeinrichtung benötigt wird, mit welcher sowohl die einzelne Temperiereinheit als auch die Temperiereinheit mitsamt Stützwanne bequem und sicher getragen werden kann.

In einer weiteren bevorzugten Ausgestaltung weist die Stützeinrichtung wenigstens eine Griffeinrichtung auf. Die Griffeinrichtung kann dabei insbesondere als Griffleiste und/oder Trageleiste und/oder Henkel oder dergleichen ausgeführt sein. Möglich ist auch, dass wenigstens ein Teil der Stützeinrichtung als Tragebereich ausgebildet ist. Besonders vorteilhaft an einer solchen Ausgestaltung ist, dass die Temperiereinrichtung im beladenen Zustand, beispielsweise mit Speisen auf einem Tisch, sicher bewegt werden kann. Es ist nicht nötig, die abnehmbare Griffeinrichtung an der Temperiereinheit anzubringen oder die heiße Temperiereinheit anzufassen. Weiterhin kann die Stützeinrichtung zusammen mit der Temperiereinheit sicher getragen und transportiert werden.

Es ist ebenfalls möglich, dass die Stützeinrichtung wenigstens eine Aufnahmemöglichkeit für die Griffeinrichtung aufweist. Dabei sind beispielsweise die Griffe von der Temperiereinheit abnehmbar und an die Stützeinrichtung anbringbar. Somit ist mit der gleichen Griffeinrichtung sowohl die Temperiereinheit als auch die Stützeinrichtung sowie die gesamte Temperiereinrichtung mitsamt der Stützeinrichtung und der Temperiereinheit aufnehmbar. Die Aufnahmemöglichkeit an der Stützeinrichtung ist dabei vorzugsweise so ausgestaltet, wie es zuvor für den Aufnahmebereich beschrieben wurde.

Das erfindungsgemäße Gargerät umfasst wenigstens eine Temperiereinrichtung mit wenigstens einer passiven Temperiereinheit. Die Temperiereinrichtung weist wenigstens eine abnehmbare Griffeinrichtung auf. Ein solches Gargerät ist sehr vorteilhaft, da mit dem Gargerät die Temperiereinheit auf eine Betriebstemperatur aufgeheizt werden kann. Während des Aufheizens kann die Griffeinrichtung abgenommen werden, so dass diese nicht erhitzt wird. Die Griffeinrichtung kann daher ohne Verbrennungsgefahr angefasst und zum Transport der Temperiereinrichtung benutzt werden.

Dabei kann die Griffeinrichtung insbesondere an der Temperiereinheit angebracht werden. Vorzugsweise ist die Temperiereinrichtung wenigstens teilweise derart ausgebildet, wie es zuvor beschrieben wurde.

Weitere Vorteile und Anwendungsmöglichkeiten der vorliegenden Erfindung ergeben sich aus der Beschreibung eines Ausführungsbeispiels, das nun mit Bezug auf die beiliegenden Figuren erläutert wird.

In den Figuren zeigen:
- Figur 1: eine schematische Darstellung einer erfindungsgemäßen Temperiereinrichtung in perspektivischer Ansicht;
- Figur 2: die Temperiereinrichtung aus Figur 1 in einer Draufsicht;
- Figur 3: die Temperiereinrichtung aus Figur 1 in einer geschnittenen Seitenansicht;
- Figur 4: die Temperiereinrichtung aus Figur 1 in einer Frontalansicht; und Figur 5 eine schematische Darstellung eines Gargerätes mit einer Temperiereinheit in perspektivischer Ansicht.

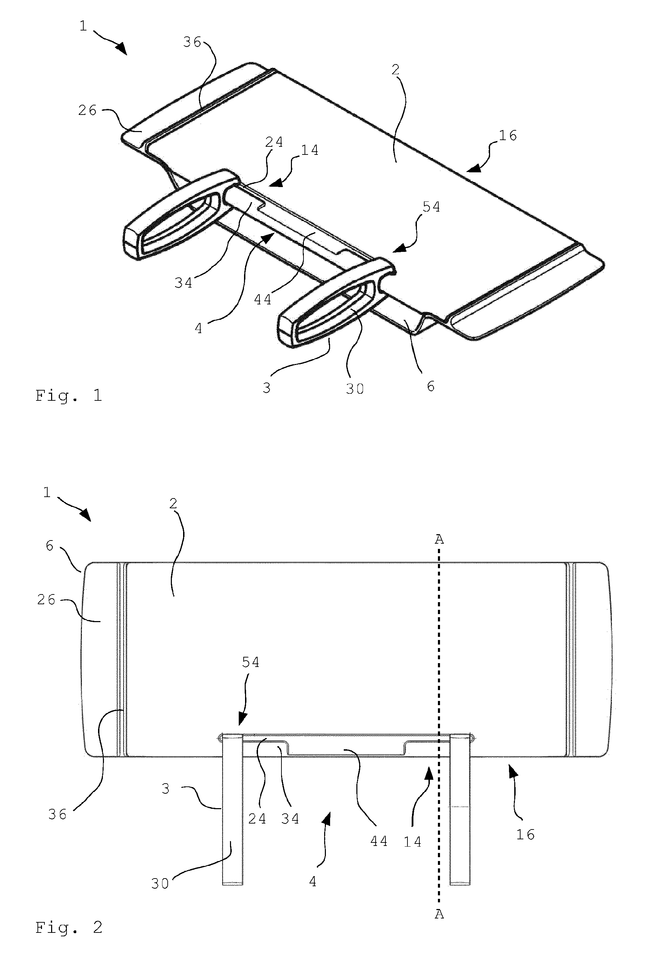

In Figur 1 ist eine erfindungsgemäße Temperiereinrichtung 1 perspektivisch dargestellt. Die Temperiereinrichtung 1 hat eine Temperiereinheit 2 und eine Stützeinrichtung 6, wobei hier die Temperiereinheit 2 in die Stützeinrichtung 6 eingelegt ist. Die Temperiereinheit 2 ist als ebene, blockartige Platte ausgebildet, so dass Speisen gut auf der Temperiereinheit 2 abgestellt werden können. Die Temperiereinheit 2 besteht insbesondere aus einem gut Wärme speichernden Material und ist hier aus Aluminium gefertigt. So können auf der entsprechend aufgeheizten Tempereinheit 2 die Speisen auch über einen längeren Zeitraum warm gehalten werden.

An einer Längsseite 16 der Temperiereinheit 2 befindet sich hier eine Aufnahmeeinrichtung 4 für eine Griffeinrichtung 3. Die Aufnahmeeinrichtung 4 kann z. B. bereits bei der Herstellung der Temperiereinheit 2 gebildet werden, beispielsweise wenn die Temperiereinheit 2 durch ein Gussverfahren hergestellt wird. Eine solche Temperiereinheit 2 ist, wenn diese beispielsweise aus einem Stück Aluminium gefertigt ist, hochwertig und hat ein ansprechendes Design. Die Aufnahmeeinrichtung 4 kann aber auch fest, aber insbesondere wieder lösbar an der Temperiereinheit 2 angebracht sein. Möglich ist auch, dass die Aufnahmeeinrichtung durch ein Fräsverfahren in die Ober- und Unterseite der Temperiereinheit 2 eingearbeitet wurde. Möglich sind auch andere Verfahren.

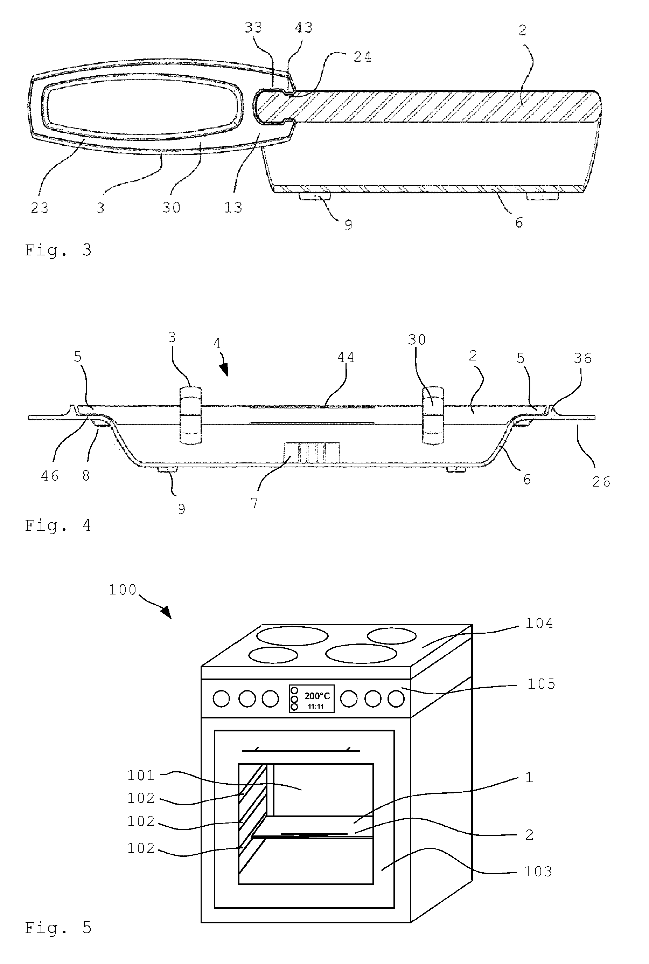

An der Aufnahmeeinrichtung 4 der Temperiereinheit 2 sind hier zwei Griffeinrichtungen 3 angebracht und als Griffe 30 ausgeführt, welche die Aufnahmeeinrichtung 4 teilweise maulartig umgreifen. Ein Griff 30 kann durch eine Bewegung nach vorne in einen Eingangsbereich 44 eingeführt und durch eine seitliche Bewegung in ein Aufnahmeprofil 14 geschoben werden. Das Aufnahmeprofil 14 weist eine Vertiefung 24 auf, welche hier in die Temperiereinheit 2 eingearbeitet ist, sowie eine Erhebung 34, welche ebenfalls aus der Temperiereinheit 2 gebildet ist. Das Aufnahmeprofil 14 sowie die Verbindung von Temperiereinheit 2 und Griffeinrichtung 3 sind in Figur 4 näher dargestellt.

Von einem Abschnitt des Aufnahmeprofils 14, welcher näher zu dem Eingangsbereich 44 liegt, kann der Griff 30 unter einem leicht erhöhten Kraftaufwand seitlich in einen weiteren Abschnitt des Aufnahmeprofils 14 geschoben werden, welcher als Verriegelungsbereich 54 ausgebildet ist. Im Verriegelungsbereich 54 weist das Aufnahmeprofil 14 veränderte Ausmaße auf, wodurch der Griff 30 besonders fest mit der Temperiereinheit 2 verbunden wird. So ist ein sicherer Transport der Temperiereinheit 2 mittels der Griffe 30 möglich, ohne dass sich die Temperiereinheit 2 unbeabsichtigt lösen und herunter fallen kann.

Die Stützeinrichtung 6 ist hier als Stützschale ausgeführt und hat zwei offene Seiten sowie zwei geschlossene Seiten. An den geschlossenen Seiten ist jeweils eine Griffeinrichtung, welche als Griffleiste 26 ausgebildet ist. An den Griffleisten 26 kann die Stützeinrichtung 6 mitsamt der Temperiereinheit 2 sicher mit beiden Händen getragen werden. Die Griffleiste 26 hat einen Wulst 36, welcher die Hände beim Tragen vor einem Kontakt mit der erhitzten Temperiereinheit 2 schützt.

Die Stützeinrichtung 6 besteht vorzugsweise im Wesentlichen aus einem ähnlichen oder dem gleichen Material wie die Temperiereinheit 2 und ist im Wesentlichen aus einem Stück geformt bzw. gegossen. Hier ist die Stützschale aus einem Stück Aluminium gefertigt. Dadurch sind sowohl die optische als auch die haptische Wahrnehmung der gesamten Temperiereinrichtung 1 sehr hochwertig.

In Figur 2 ist die Temperiereinrichtung 1 aus Figur 1 in einer Aufsicht von oben dargestellt.

Die Figur 3 zeigt eine schematische Darstellung eines Querschnitts durch die Temperiereinrichtung 1 entlang der Linie A-A aus Figur 2, in welchem insbesondere die Verbindung des Griffes 30 mit dem Aufnahmeprofil 14 im Bereich des Verriegelungsbereiches 54 dargestellt ist.

Der Griff 30 weist einen zum Festhalten mit wenigstens einer Hand geeigneten Griffbereich 23 sowie einen Halteabschnitt 13 auf. Der Halteabschnitt 13 ist maulartig ausgebildet und umgreift das Aufnahmeprofil 14 sowohl an der Unterseite als auch an der Oberseite der Temperiereinheit 2. Der Querschnitt des Halteabschnitts 13 ist insbesondere auf den Querschnitt des Aufnahmeprofils 14 angepasst. Dabei umfassen hier zwei gegenüberliegende Ausnehmungen 33 des Halteabschnitts 13 zwei gegenüberliegende Erhebungen 34 des Aufnahmeprofils 14. Der Halteabschnitt 13 hat weiterhin zwei gegenüberliegende Vorsprünge 43, welche in jeweils eine Vertiefung 24 des Aufnahmeprofils 14 auf der Ober- und Unterseite der Temperiereinheit 2 greifen. Eine solche Ausgestaltung ermöglicht ein einfaches und sicheres Verbinden des Griffes 30 und vorzugsweise zweier Griffe 30 mit der Temperiereinheit 2.

Außerhalb des Verriegelungsbereiches 54 kann das Aufnahmeprofil 14 beispielsweise eine kleinere Erhebung 34 und/oder eine vergrößerte Vertiefung 24 aufweisen, so dass der Halteabschnitt 13 mit weniger Kraftaufwand durch das Aufnahmeprofil 14 geschoben werden kann. Dadurch lässt sich der Griff 30 besonders leicht anbringen bzw. abnehmen.

Im Eingangsbereich 44 ist hier kein Aufnahmeprofil 14 ausgebildet. Dadurch kann der Halteabschnitt 13 im Eingangsbereich 44 in die Aufnahmeeinrichtung 4 eingeführt bzw. aus der Aufnahmeeinrichtung 4 entnommen werden. Dazu weist der Eingangsbereich 44 insbesondere keine Erhebung 34 auf, so dass die Vorsprünge 43 des Halteabschnitts 13 ohne irgendwelche Hindernisse aus der Aufnahmeeinrichtung 4 herausgezogen bzw. in die Aufnahmeeinrichtung 4 hineingeschoben werden können.

Die Figur 4 zeigt die Temperiereinrichtung 1 aus Figur 1 in einer schematischen Frontalansicht. Die Temperiereinheit 2 weist an zwei gegenüberliegenden Seiten jeweils eine Führungseinrichtung 5 zur Aufnahme in die Gargutträgeraufnahme 102 eines Gargerätes 100 auf. Die Führungseinrichtung 5 ist hier ein Bereich der Temperiereinheit 2, welcher etwas dünner als die restliche Temperiereinheit 2 ausgebildet ist. Dadurch ist die Führungseinrichtung 5 geeignet, um in eine insbesondere für Backbleche und andere Gargutträger vorgesehene Gargutträgeraufnahme 102 eingeführt zu werden. Die Temperiereinheit 2 kann so bequem in den Garraum 101 eines Gargerätes 100 eingeschoben und erhitzt werden. Auch das Anbringen der Griffe 30 an der erhitzten, im Garraum 101 befindlichen Temperiereinheit 2 ist besonders sicher, wenn die Temperiereinheit 2 in eine Gargutträgeraufnahme 102 eingeschoben ist.

Die Stützeinrichtung 6 hat zwei seitliche Auflageflächen 46, auf welche die Temperiereinheit 2 aufgelegt werden kann. Die Auflageflächen 46 sind hier so ausgestaltet, dass insbesondere die Führungseinrichtung 5 der Temperiereinheit 2 wenigstens teilweise formschlüssig aufliegen kann. Das ist besonders vorteilhaft, da die Temperiereinheit 2 nicht von der Stützeinrichtung 6 herunterrutschen kann, auch wenn beispielsweise schwere Schüsseln mit Speisen auf der Temperiereinheit 2 abgestellt werden. Unter der Stützeinrichtung 6 befinden sich vier Füße 9, welche einen sicheren Stand der Stützeinrichtung 6 bzw. der gesamten Temperiereinrichtung 1 beispielsweise auf einem Tisch ermöglichen.

Die Stützeinrichtung 6 weist eine Verbindungseinrichtung 8 zur Verbindung der Stützeinrichtung 6 mit der Temperiereinheit 2 auf. Die Verbindungseinrichtung 8 ist hier als insbesondere temperaturisolierender Silikonstopfen ausgebildet, von welchem jeweils zwei an einer Auflagefläche 46 angeordnet sind. Daran ist vorteilhaft, dass der Silikonstopfen eine Weiterleitung der Hitze von der erhitzten Temperiereinheit 2 an die Stützeinrichtung 6 und insbesondere an die Griffleiste 26 zumindest teilweise verhindert. Ein weiterer Vorteil ist, dass der Silikonstopfen eine rutschhemmende Wirkung hat und die Temperiereinheit 2 so auf der Stützeinrichtung 6 sicher aufliegt.

Weiterhin umfasst die Stützeinrichtung 6 wenigstens eine Halterung 7 für eine Heizquelle, wobei die Heizquelle insbesondere zum Warmhalten der aufgeheizten Temperiereinheit 2 dient. Eine solche Heizquelle ist sehr vorteilhaft, weil dadurch die erhitzte Temperiereinheit 2 langsamer abkühlt und somit Speisen über einen noch längeren Zeitraum warm gehalten werden können. Die Halterung7 ist hier als zylindrischer Hohlkörper und/oder als Ring ausgebildet und ist insbesondere für eine Heizquelle mit offener Flamme wie beispielsweise ein Teelicht oder ein Spiritusbrenner oder dergleichen geeignet.

Figur 5 zeigt in einer perspektivischen Ansicht ein typisches Gargerät 100, in welchem die Temperiereinheit 2 aufgeheizt werden kann. Somit ist kein spezielles und oft teures Aufheizgerät notwendig. Das Gargerät 100 kann von einem Benutzer über eine Bedieneinrichtung 105 bedient werden und hat einen Garraum 101, welcher von einer Tür 103 verschlossen werden kann sowie ein Kochfeld 104. Der Garraum 101 ist durch wenigstens eine Heizquelle, wie beispielsweise eine Umluftheizquelle, beheizbar. Weitere Heizquellen, wie ein Oberhitzeheizkörper und ein Unterhitzeheizkörper sowie eine Mikrowellenheizquelle und dergleichen können vorgesehen sein. Im Garraum 101 ist wenigstens eine Gargutträgeraufnahme 102, in welche Gargutträger wie beispielsweise Backbleche oder dergleichen eingeschoben werden können.

Zum Aufheizen wird die Temperiereinheit 2 mit den Griffen 30 aufgenommen und, ähnlich wie ein Backblech, in eine Gargutträgeraufnahme 102 eines Gargerätes 100 mit geöffneter Tür 103 eingeschoben. Anschließend werden die Griffe 30 durch eine Seitwärtsbewegung aus dem Verriegelungsbereich 54 und dem Aufnahmeprofil 14 in den Eingangsbereich 44 geschoben. Durch eine weitere, zum Körper hin gerichtete Bewegung werden die Griffe 30 aus dem Eingangsbereich 44 herausgezogen. Dann wird die Garraumtür 103 geschlossen und die Temperiereinheit 2 über einen geeigneten Zeitraum, z. B. 20 Minuten, bei einer geeigneten Temperatur, wie beispielsweise 250°C, aufgeheizt. Möglich sind auch andere Zeiträume sowie andere Temperaturen.

Wenn die Temperiereinheit 2 ausreichend aufgeheizt ist, wird die Garraumtür 103 geöffnet und die Griffe 30 angebracht. Dazu werden die Griffe 30 in den Eingangsbereich 44 eingeführt und durch eine seitliche Bewegung in das Aufnahmeprofil 14 und den Verriegelungsbereich 54 geschoben. Die abnehmbaren Griffe 30 sind besonders vorteilhaft, weil die Griffe 30 nicht zusammen mit der Temperiereinheit 2 aufgeheizt werden und somit ein sehr sicherer Umgang mit der erhitzten Temperiereinheit 2 ohne Verbrennungsgefahr an den Griffen 30 möglich ist.

Die Temperiereinheit 2 wird an den Griffen 30 aus dem Garraum 101 entnommen und in die Stützeinrichtung 6 eingelegt. Nun können Speisen auf der Temperiereinheit 2 abgestellt und warm gehalten werden. Um das Abkühlen der Temperiereinheit 2 zu verlangsamen bzw. zu verhindern, kann beispielsweise ein Spiritusbrenner in die Halterung 7 der Stützeinrichtung 6 gestellt und angezündet werden. Soll die mit Speisen belegte Temperiereinrichtung 1 getragen werden, beispielsweise zu einem Tisch, kann dazu bequem und sicher an den Griffleisten 26 der Stützeinrichtung 6 angefasst werden. Durch die temperaturisolierende Verbindungseinrichtung 8 weisen die Griffe 30 keine Verbrennungsgefahr auf.

Die erfindungsgemäße Temperiereinrichtung 1 kann auch zum Kühlhalten von Speisen, wie z. B. Eiscreme, eingesetzt werden. Dazu wird die Temperiereinheit 2 mit abgenommenen Griffen 30 beispielsweise in einem Kühlschrank oder in einem Gefriergerät oder dergleichen abgekühlt. Die ausreichend gekühlte Temperiereinheit 2 kann mit den Griffen 30 aufgenommen und sicher transportiert werden, ohne dass die Hände dabei mit der kalten Temperiereinheit 2 in Kontakt kommen. Die Temperiereinheit 2 kann dann in die Stützeinrichtung 6 eingelegt werden und die zu kühlenden Speisen aufnehmen. Um das Erwärmen der Temperiereinheit 2 zu verlangsamen, können beispielsweise Eiswürfel oder Kühlakkus oder dergleichen in die Stützeinrichtung 6 gegeben werden.

Die erfindungsgemäße Temperiereinrichtung 1 hat eine Temperiereinheit 2 sowie eine abnehmbare Griffeinrichtung 3 und ist universell zum Warmhalten und zum Kühlhalten insbesondere von Speisen einsetzbar. Dazu kann die Temperiereinheit 2 bequem und einfach in einem herkömmlichen Gargerät 100 aufgeheizt bzw. in einem herkömmlichen Kühl- oder Gefriergerät abgekühlt werden. Das ist besonders vorteilhaft, weil keine speziellen Aufheizgeräte bzw. Kühlgeräte notwendig sind. Dadurch ist die Temperiereinrichtung 1 besonders kostengünstig. Ein weiterer Vorteil ist, dass die Griffeinrichtung 3 während des Aufheizens bzw. Abkühlens abgenommen werden kann und dadurch beim Anfassen der Griffeinrichtung 3 weder eine Verbrennungsgefahr noch eine Verkühlungsgefahr besteht.

### Bezugszeichenliste

- 1: Temperiereinrichtung
- 2: Temperiereinheit
- 3: Griffeinrichtung
- 4: Aufnahmeeinrichtung
- 5: Führungseinrichtung
- 6: Stützeinrichtung
- 7: Halterung
- 8: Verbindungseinrichtung
- 9: Fuß
- 13: Halteabschnitt
- 14: Aufnahmeprofil
- 16: Längsseite
- 23: Griffbereich
- 24: Vertiefung
- 26: Griffeinrichtung / Griffleiste
- 30: Griff
- 33: Ausnehmung
- 34: Erhebung
- 36: Wulst
- 43: Vorsprung
- 44: Eingangsbereich
- 46: Auflagefläche
- 54: Verriegelungsbereich
- 100: Gargerät
- 101: Garraum
- 102: Gargutträgeraufnahme
- 103: Tür
- 104: Kochfeld
- 105: Bedieneinrichtung

## Patentansprüche

1. Temperiereinrichtung (1), insbesondere zum Warmhalten und/oder Kühlhalten von Speisen, mit wenigstens einer Temperiereinheit (2), **dadurch gekennzeichnet, dass** wenigstens eine abnehmbare Griffeinrichtung (3) vorgesehen ist.

2. Temperiereinrichtung (1) nach Anspruch 1, **dadurch gekennzeichnet, dass** wenigstens eine Griffeinrichtung (3) wenigstens teilweise aus wenigstens einem Kunststoff besteht.

3. Temperiereinrichtung (1) nach einem der vorhergehenden Ansprüche, **dadurch gekennzeichnet, dass** wenigstens eine und vorzugsweise wenigstens zwei Aufnahmeeinrichtungen (4) zur Befestigung der Griffeinrichtung (3) vorgesehen sind, wobei die Aufnahmeeinrichtung (4) insbesondere an der Temperiereinheit (2) vorgesehen ist.

4. Temperiereinrichtung (1) nach einem der vorhergehenden Ansprüche, **dadurch gekennzeichnet, dass** die Aufnahmeeinrichtung (4) wenigstens ein Aufnahmeprofil (14) umfasst, wobei das Aufnahmeprofil (14) insbesondere wenigstens eine Vertiefung (24) und/oder wenigstens eine Erhebung (34) aufweist.

5. Temperiereinrichtung (1) nach einem der vorhergehenden Ansprüche, **dadurch gekennzeichnet, dass** an der Aufnahmeeinrichtung (4) wenigstens ein Eingangsbereich (44) zum Einführen der Griffeinrichtung (3) vorgesehen ist.

6. Temperiereinrichtung (1) nach einem der vorhergehenden Ansprüche, **dadurch gekennzeichnet, dass** an der Aufnahmeeinrichtung (4) wenigstens ein Verriegelungsbereich (54) zum gesicherten Anbringen der Griffeinrichtung (3) vorgesehen ist.

7. Temperiereinrichtung (1) nach einem der vorhergehenden Ansprüche, **dadurch gekennzeichnet, dass** die Griffeinrichtung (3) wenigstens einen Halteabschnitt (13) umfasst, welcher zur Verbindung mit der Aufnahmeeinrichtung (4) geeignet und ausgebildet ist.

8. Temperiereinrichtung (1) nach einem der vorhergehenden Ansprüche, **dadurch gekennzeichnet, dass** ein Querschnitt des Halteabschnitts (13) an einen Querschnitt des Aufnahmeprofils (14) angepasst ist.

9. Temperiereinrichtung (1) nach einem der vorhergehenden Ansprüche, **dadurch gekennzeichnet, dass** die Griffeinrichtung durch wenigstens zwei Bewegungen in unterschiedliche Richtungen mit der Aufnahmeeinrichtung sicher verbindbar und durch wenigstens zwei Bewegungen in unterschiedliche Richtungen von der Aufnahmeeinrichtung lösbar ausgebildet ist.

10. Temperiereinrichtung (1) nach einem der vorhergehenden Ansprüche, **dadurch gekennzeichnet, dass** die Temperiereinheit (2) derart ausgebildet ist, dass die Temperiereinheit (2) in einem Garraum (101) eines Gargerätes (100) bei typischen Garraumtemperaturen aufheizbar ist.

11. Temperiereinrichtung (1) nach einem der vorhergehenden Ansprüche, **dadurch gekennzeichnet, dass** die Temperiereinheit (2) wenigstens teilweise aus wenigstens einem Metall besteht.

12. Temperiereinrichtung (1) nach einem der vorhergehenden Ansprüche, **dadurch gekennzeichnet, dass** die Temperiereinheit (2) in einer Gargutträgeraufnahme (102) eines Gargerätes (100) aufnehmbar ist, wobei an der Temperiereinheit (2) insbesondere eine Führungseinrichtung (5) zur Aufnahme in der Gargutträgeraufnahme (102) vorgesehen ist.

13. Temperiereinrichtung (1) nach einem der vorhergehenden Ansprüche, **dadurch gekennzeichnet, dass** wenigstens eine Stützeinrichtung (6) zur Aufnahme der Temperiereinheit (2) vorgesehen ist, wobei die Stützeinrichtung (6) insbesondere eine Halterung (7) für eine Heizquelle und vorzugsweise für eine Heizquelle mit offener Flamme zur Beheizung der Temperiereinheit (2) aufweist.

14. Temperiereinrichtung (1) nach einem der vorhergehenden Ansprüche, **dadurch gekennzeichnet, dass** die Stützeinrichtung (6) wenigstens eine weinigstens teilweise sichernde und/oder wenigstens teilweise temperaturisolierende Verbindungseinrichtung (8) aufweist.

15. Temperiereinrichtung (1) nach einem der vorhergehenden Ansprüche, **dadurch gekennzeichnet, dass** die Stützeinrichtung (6) wenigstens eine Griffeinrichtung (26) aufweist.

16. Gargerät (100) mit wenigstens einer Temperiereinrichtung (1) insbesondere nach einem der vorhergehenden Ansprüche, wobei die Temperiereinrichtung (1) wenigstens eine passive Temperiereinheit (2) umfasst, **dadurch gekennzeichnet, dass** die Temperiereinrichtung (1) wenigstens eine abnehmbare Griffeinrichtung (3) aufweist.
